# EUROPEAN PATENT APPLICATION

(11) **EP 2 888 942 A1**
(43) Date of publication of application: **01.07.2015**
(21) Application number: 13831257.4
(22) Date of filing: 07.08.2013
(51) Int. Cl.: A21C 3/04, A23L 1/16

(54) **EXTRUSION NOODLE-MAKING MACHINE AND EXTRUDED NOODLE RIBBON**

(30) Priority: 22.08.2012 JP 2012183007
(71) Applicant: Nisshin Foods Inc., Tokyo 101-8441 (JP)
(72) Inventor: HIGUCHI, Masahiro, Tokyo 101-8441 (JP); ITO, Kensuke, Tatebayashi-shi, Gunma 374-0052 (JP); SORI, Hirohumi, Yokohama-shi, Kanagawa 223-0061 (JP)
(74) Representative: Kuhnen & Wacker
(86) International application number: PCT/JP2013/071354
(87) International publication number: WO 2014/030538

(57) **Abstract**

An extrusion noodle-making machine includes a mixer configured to produce noodle dough by mixing a noodle sheet raw material that is a mixture of raw material powder, and water or a liquid seasoning. The extrusion noodle-making machine produces a noodle sheet by further pressing the noodle dough extruded from the mixer into a dough in-pressing opening of a nozzle connected to a discharge opening of the mixer and extruding the noodle dough from a noodle sheet outlet of the nozzle while extracting gas from the noodle dough using a vacuum pump at a pressure of -0.06 to - 0.095 MPa (gauge pressure). At a predetermined position between the dough in-pressing opening and the noodle sheet outlet, the cross-sectional shape of a dough passage extending from the dough in-pressing opening to noodle sheet outlet of the nozzle has a smaller lateral width near a longitudinal central part of the cross-sectional shape than the lateral width at both longitudinal ends.

## Description

### {Technical Field}

The present invention relates to an extrusion noodle-making machine used for producing noodles and an extruded noodle sheet produced using the extrusion noodle-making machine.

### {Background Art}

When noodles are continuously produced, the dough of the noodles is, for example, directly extruded or pressed and extended with a roller to form a noodle sheet, and then the noodle sheet is split into noodle lines with a cutting tool to form noodles. Especially, when direct extrusion produces a noodle sheet and the dough is produced with a continuous mixer, the dough is pressed and pushed into a flat extrusion die to form the noodle sheet as disclosed in Patent Literature 1.

### {Citation List}

### {Patent Literature}

Patent Literature 1: Japanese examined utility model application publication No. 4-49909

### {Summary of Invention}

### {Technical Problem}

However, when the flat extrusion die disclosed in Patent Literature 1 is used, the dough flows at a higher flow rate near the central part of the cross-sectional surface of the noodle sheet outlet of the extrusion die than the peripheral part. This causes a problem, for example, in that the central part in the width direction of the produced noodle sheet expands. Furthermore, the corners of the cross-sectional surface of the noodle sheet outlet have a square shape. This significantly increases the fluid resistance on the corners in comparison with the other parts. This causes a burr on a corner of the noodle sheet. The unevenness of the noodle sheet described above causes the noodle sheet to dry unevenly during the maturation period of the noodle sheet. This has a negative effect on the texture.

An objective of the present invention is to produce an extruded noodle sheet that has a smooth surface without a burr and is uniform in thickness.

### {Solution to Problem}

The extrusion noodle-making machine of the present invention includes a mixer configured to produce noodle dough by mixing a noodle sheet raw material that is a mixture of raw material powder, and water or a liquid seasoning. The extrusion noodle-making machine produces a noodle sheet by further pressing the noodle dough extruded from the mixer into a dough in-pressing opening of a nozzle connected to a discharge opening of the mixer and extruding the noodle dough from a noodle sheet outlet of the nozzle while extracting gas from the noodle dough using a vacuum pump at a pressure of -0.06 to -0.095 MPa (gauge pressure). At a predetermined position between the dough in-pressing opening and the noodle sheet outlet, the cross-sectional shape of a dough passage extending from the dough in-pressing opening to noodle sheet outlet of the nozzle has a smaller lateral width near a longitudinal central part of the cross-sectional shape than the lateral width at both longitudinal ends.

In the extrusion noodle-making machine of the present invention, the cross-sectional area of the dough in-pressing opening is approximately equal to the cross-sectional area of the noodle sheet outlet.

In the extrusion noodle-making machine of the present invention, the predetermined position is near a middle part between the dough in-pressing opening and the noodle sheet outlet.

In the extrusion noodle-making machine of the present invention, the predetermined position is from a position at a predetermined distance from the dough in-pressing opening in a direction toward the noodle sheet outlet to the noodle sheet outlet.

In the extrusion noodle-making machine of the present invention, the predetermined position is near the noodle sheet outlet.

In the extrusion noodle-making machine of the present invention, at least one of four corners of the cross-sectional shape of the dough passage has a curved surface.

In the extrusion noodle-making machine of the present invention, a sliding surface is formed on an inner wall surface of the dough passage.

In the extrusion noodle-making machine of the present invention, the mixer includes two extrusion screws.

The extruded noodle sheet of the present invention is produced using the extrusion noodle-making machine of the present invention.

### {Advantageous Effects of Invention}

According to the present invention, an extruded noodle sheet that has a smooth surface without a burr and is uniform in thickness can be produced.

### {Brief Description of Drawings}

Fig. 1 is a schematic side view of a vacuum extrusion noodle-making machine according to an embodiment.
Fig. 2 is a view of a mixer and nozzle in the vacuum extrusion noodle-making machine according to the embodiment.
Fig. 3 is a view of a shape of the nozzle of the vacuum extrusion noodle-making machine according to the embodiment.
Fig. 4 is a view of another shape of the nozzle of the vacuum extrusion noodle-making machine according to the embodiment.
Fig. 5 is a view of another shape of the nozzle of the vacuum extrusion noodle-making machine according to the embodiment.
Fig. 6 is a view of another shape of a bulge on the nozzle of the vacuum extrusion noodle-making machine according to the embodiment.
Fig. 7 is a view of a shape of a noodle sheet outlet of the nozzle of the vacuum extrusion noodle-making machine according to the embodiment.
Fig. 8 is a view of a shape of the noodle sheet outlet of the nozzle of the vacuum extrusion noodle-making machine according to the embodiment.

### {Description of Embodiments}

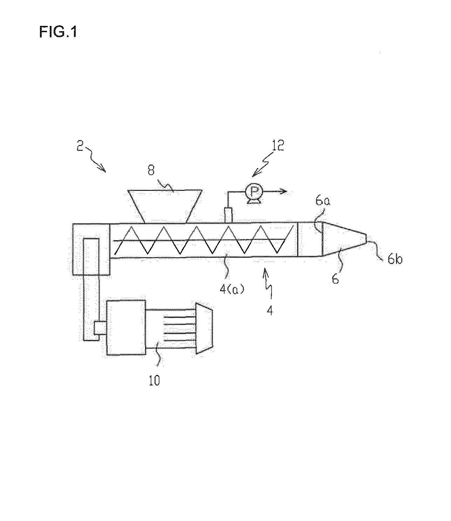

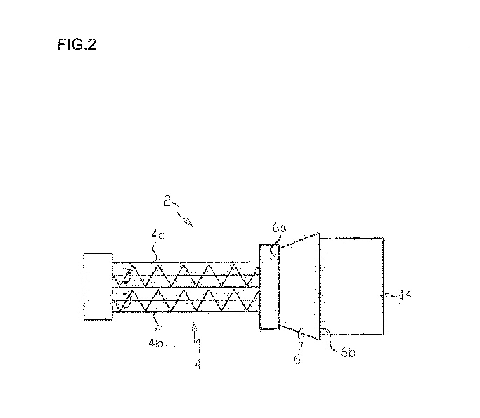

The vacuum extrusion noodle-making machine according to the embodiment of the present invention will be described hereinafter with reference to the appended drawings. Fig. 1 is a schematic side view of the vacuum extrusion noodle-making machine according to the embodiment. Fig. 2 is a view of a mixer and nozzle in the vacuum extrusion noodle-making machine according to the embodiment.

A vacuum extrusion noodle-making machine 2 includes a mixer 4 configured to make the dough of noodles from a noodle sheet raw material that is a mixture of raw material powder (flour), and water or a liquid seasoning. The mixer 4 includes two extrusion screws 4a and 4b. A dough in-pressing opening 6a of a nozzle 6 is connected to a discharge opening of the mixer 4. The mixer 4 is provided with a charging port 8 from which the noodle sheet raw material is charged. In that case, the noodle sheet raw material charged from the charging port 8 is a mixture of the raw material powder fed from a raw material powder feeder (not illustrated in the drawings) and the water or liquid seasoning fed from a raw material liquid feeder (not illustrated in the drawings) that have been mixed using a preliminary mixing device (not illustrated in the drawings).

The extrusion screws 4a and 4b of the mixer 4 are rotated and driven in the directions of arrows in Fig. 2 with a motor 10. Accordingly, the noodle sheet raw material charged from the charging port 8 is further mixed and consolidated using the screws 4a and 4b, and receives a suppress strength toward the nozzle 6 while gas is extracted from the noodle sheet raw material with a vacuum pump 12 at a pressure of -0.06 to -0.09 MPa (gauge pressure). The consolidated noodle sheet raw material is press-fitted to the nozzle 6 from the dough in-pressing opening 6a of the nozzle 6 and is formed into a noodle sheet 14 with the nozzle 6, and then is extruded from the noodle sheet outlet 6b.

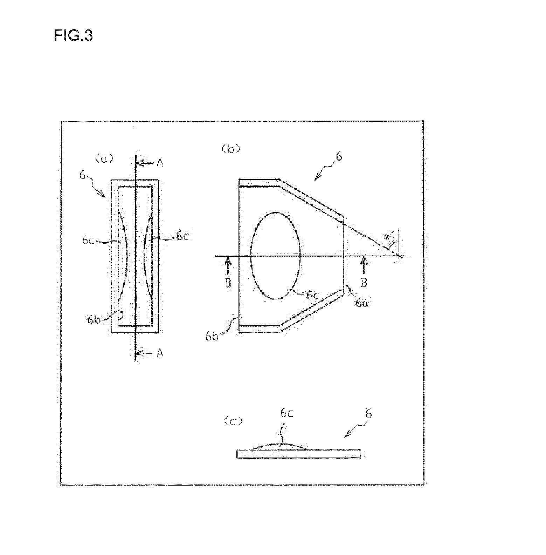

Next, the shape of the nozzle 6 will be described with reference to Fig. 3. Note that Fig. 3(a) is a view of the nozzle 6 viewed from the noodle sheet outlet 6b side. Fig. 3(b) is a cross-sectional view taken from line A-A of Fig. 3(a). Fig. 3(c) is a cross-sectional view taken from line B-B of Fig. 3(b).

The dough in-pressing opening 6a and noodle sheet outlet 6b of the nozzle 6 have a rectangular shape. The dough in-pressing opening 6a and the noodle sheet outlet 6b are formed so as to have approximately the same cross-sectional area. The longitudinal width of the rectangular cross-sectional shape of the dough passage extending from the dough in-pressing opening 6a to the noodle sheet outlet 6b gradually increases from the dough in-pressing opening 6a toward the noodle sheet outlet 6b, and is maintained constant to the noodle sheet outlet 6b after the increase. Note that the degree at which the cross-sectional shape of the dough passage gradually increases in the longitudinal direction is preferably a degree of α° (60° ≤ α° ≤ 80°) to the longitudinal direction of the dough passage as illustrated in Fig. 3(b) . In that case, elliptically-shaped bulges 6c are formed on the upper and lower surfaces of the dough passage that form the dough passage near the longitudinal central part near the middle part of the dough passage from the dough in-pressing opening 6a to the noodle sheet outlet 6b of the nozzle 6. Note that the height of the elliptically-shaped bulge 6c is highest at the central part and gradually decreases toward the circumferential edges of elliptically-shaped bulge. Accordingly, the lateral width of the cross-sectional shape of the dough passage is reduced at the part at which the elliptically-shaped bulges 6c are formed by the heights of the elliptically-shaped bulges 6c. In other words, at a predetermined position between the dough in-pressing opening 6a and the noodle sheet outlet 6b, the lateral width near the longitudinal central part of the cross-sectional shape of the dough passage is smaller than the lateral width at both longitudinal ends.

As described above, the lateral width near the longitudinal central part of the cross-sectional shape of the dough passage is reduced to smaller than the lateral width at both longitudinal ends of the cross-sectional shape. This increases the passing resistance near the longitudinal central part of the cross-sectional shape of the dough passage when the dough formed of the noodle sheet raw material pressed into the nozzle 6 passes through the dough passage of the nozzle 6 to larger than the passing resistance at both ends. This can maintain a constant velocity distribution of the dough in the longitudinal direction of the cross-sectional shape of the dough passage. Accordingly, even when the cross-sectional shape of the dough passage of the nozzle 6 has a large longitudinal width and a wide noodle sheet is produced, the noodle sheet extruded from the nozzle 6 does not have a crack or a warp. Furthermore, the expansion of the central part in the width direction of the noodle sheet can be prevented. This can produce a uniform noodle sheet. Optimizing the distance between the screws can produce dough to which water have been added uniformly and that is appropriate for extrusion.

Using the extrusion noodle-making machine according to the embodiment can produce an extruded noodle sheet that has a smooth surface without a burr and is uniform in thickness. The extruded noodle sheet has a good texture. Using the extrusion noodle-making machine according to the embodiment can also produce an extruded noodle sheet such that the extruded noodle sheet have a good texture, the speed at which the noodle sheet dries in the maturation period of the noodle sheet can be controlled, and the extruded noodle sheet can be readily handled also after the completion of the maturation.

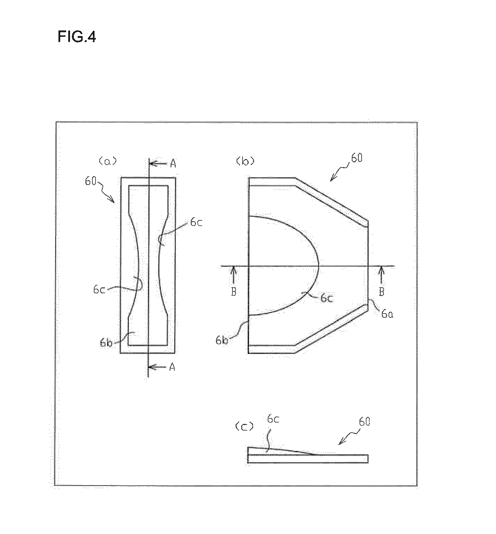

Note that, although the nozzle having the shape illustrated in Fig. 3 is used in the embodiment described above, a nozzle, for example, having the shape illustrated in Fig. 4 can be used as long as the nozzle has a shape in which the velocity distribution of the dough in the longitudinal direction of the cross-sectional shape of the dough passage of the nozzle 6 can be maintained constant.

The shape of a nozzle 60 will be described hereinafter with reference to Fig. 4. Note that Fig. 4(a) is a view of the nozzle 60 viewed from the noodle sheet outlet 6b side. Fig. 4(b) is a cross-sectional view taken from line A-A of Fig. 4(a). Fig. 4(c) is a cross-sectional view taken from line B-B of Fig. 4(b). Note that the same components as those of the nozzle 6 will be denoted with the same reference signs as the reference signs used in the description of the nozzle 6 in the description of the nozzle 60.

The dough in-pressing opening 6a and noodle sheet outlet 6b of the nozzle 60 have a rectangular shape. The dough in-pressing opening 6a and the noodle sheet outlet 6b are formed so as to have approximately the same cross-sectional area. The width in the longitudinal direction of the rectangular cross-sectional shape of the dough passage extending from the dough in-pressing opening 6a to the noodle sheet outlet 6b gradually increases from the dough in-pressing opening 6a toward the noodle sheet outlet 6b, and maintained constant to the noodle sheet outlet 6b after the increase. In that case, approximately semicircular shape bulges 6c are formed on the upper and lower surfaces of the dough passage that form the dough passage near the longitudinal central part that is from near the middle part of the dough passage between the dough in-pressing opening 6a and the noodle sheet outlet 6b of the nozzle 60 to the noodle sheet outlet 6b. Note that the height of the approximately semicircular shape bulge 6c is highest near the central part at the end on the noodle sheet outlet 6b side and gradually decreases toward the circumferential edges of the approximately semicircular shape bulge. Accordingly, the lateral width of the cross-sectional shape of the dough passage is reduced at the part at which the approximately semicircular shape bulges 6c are formed by the heights of the approximately semicircular shape bulges 6c. In other words, at a predetermined position between the dough in-pressing opening 6a and the noodle sheet outlet 6b, the lateral width near the longitudinal central part of the cross-sectional shape of the dough passage is smaller than the lateral width at both longitudinal ends.

As described above, the lateral width near the longitudinal central part of the cross-sectional shape of the dough passage is reduced to smaller than the lateral width at both longitudinal ends. This increases the passing resistance near the longitudinal central part of the cross-sectional shape of the dough passage when the dough formed of the noodle sheet raw material pressed into the nozzle 60 passes through the dough passage of the nozzle 60 to larger than the passing resistance at both ends. This can maintain a constant velocity distribution of the dough in the longitudinal direction of the cross-sectional shape of the dough passage. Accordingly, even when the cross-sectional shape of the dough passage of the nozzle 60 has a large longitudinal width and a wide noodle sheet is produced, the noodle sheet extruded from the nozzle 60 does not have a crack or a warp. Furthermore, the expansion of the central part in the width direction of the noodle sheet can be prevented. This can produce a uniform extruded noodle sheet. This can further produce an extruded noodle sheet that has a smooth surface without a burr and is uniform in thickness.

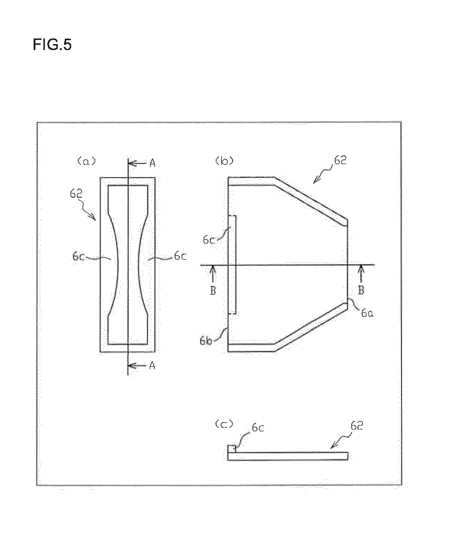

Alternatively, a nozzle, for example, having the shape illustrated in Fig. 5 can also be used. Note that Fig. 5(a) is a view of the nozzle 62 viewed from the noodle sheet outlet 6b side. Fig. 5(b) is a cross-sectional view taken from line A-A of Fig. 5(a). Fig. 5(c) is a cross-sectional view taken from line B-B of Fig. 5(b). Note that the same components as those of the nozzle 6 will be denoted with the same reference signs as the reference signs used in the description of the nozzle 6 in the description of the nozzle 62.

The dough in-pressing opening 6a and noodle sheet outlet 6b of the nozzle 62 have a rectangular shape. The dough in-pressing opening 6a and the noodle sheet outlet 6b are formed so as to have approximately the same cross-sectional area. The longitudinal width of the rectangular cross-sectional shape of the dough passage extending from the dough in-pressing opening 6a to the noodle sheet outlet 6b gradually increases from the dough in-pressing opening 6a toward the noodle sheet outlet 6b, and maintained constant to the noodle sheet outlet 6b after the increase. In that case, bulges 6c having a predetermined width are formed at the noodle sheet outlet 6b of the nozzle 62, namely, on the upper and lower surfaces of the dough passage that form the dough passage at the terminal of the dough passage. Note that the height of the bulge 6c is highest at the longitudinal central part of the dough passage and gradually decreases toward both ends. Accordingly, the lateral width of the cross-sectional shape of the dough passage is reduced at the part at which the bulges 6c are formed by the heights of the bulges 6c. In other words, at a predetermined position between the dough in-pressing opening 6a and the noodle sheet outlet 6b, the lateral width near the longitudinal central part of the cross-sectional shape of the dough passage is smaller than the lateral width at both longitudinal ends.

As described above, the lateral width near the longitudinal central part of the cross-sectional shape of the dough passage is reduced to smaller than the lateral width at both longitudinal ends. This increases the passing resistance near the longitudinal central part of the cross-sectional shape of the dough passage when the dough formed of the noodle sheet raw material pressed into the nozzle 62 passes through the dough passage of the nozzle 62 to larger than the passing resistance at both ends. This can maintain a constant velocity distribution of the dough in the longitudinal direction of the cross-sectional shape of the dough passage. Accordingly, even when a wide noodle sheet is produced, the noodle sheet extruded from the nozzle 62 does not have a crack or a warp. Furthermore, the expansion of the central part in the width direction of the noodle sheet can be prevented. This can produce a uniform extruded noodle sheet. This can further produce an extruded noodle sheet that has a smooth surface without a burr and is uniform in thickness.

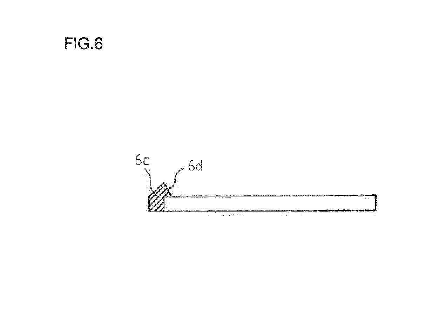

Note that the bulge 6c formed on the noodle sheet outlet 6b of the nozzle 62 can include an inclined surface 6d on the dough in-pressing opening 6a side as illustrated in Fig. 6. Providing the inclined surface 6d on the dough in-pressing opening 6a side of the bulge 6c can smoothly extrude the dough from the noodle sheet outlet 6b of the nozzle 62.

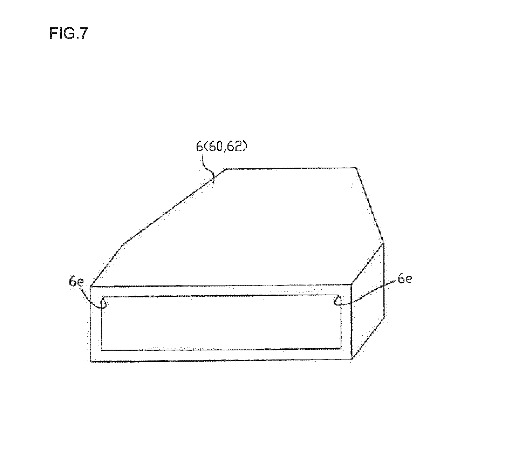

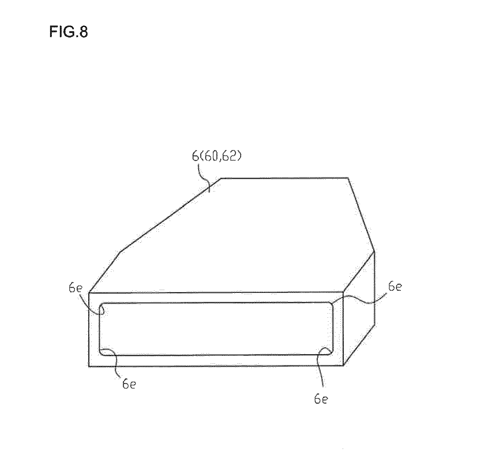

A curved surface 6e can be formed on one or more of the four corners of the cross-sectional shape of the dough passage of the nozzle 6, 60, or 62 in the embodiment described above. For example, the curved surface 6e can be formed on the upper two corners of the four corners as illustrated in Fig. 7, or on the four corners as illustrated in Fig. 8. As described above, forming the curved surface 6e on one or more of the four corners of the cross-sectional shape of the dough passage can further efficiently prevent a burr from occurring on a corner of the noodle body extruded from the nozzle 6, 60, or 62. Namely, this can avoid the solidification caused by the loss of water of a burr when the burr occurs and is exposed to the air in the maturation period.

Alternatively, a sliding surface can be formed on the inner wall surface of the dough passage of the nozzle 6, 60, or 62 in the embodiment described above. Grinding the inner wall surface of the dough passage, or applying, for example, a Teflon (registered trademark) resin on the inner wall surface can form the sliding surface.

## Claims

1. An extrusion noodle-making machine comprising:
a mixer configured to produce noodle dough by mixing a noodle sheet raw material that is a mixture of raw material powder, and water or a liquid seasoning, wherein the extrusion noodle-making machine produces a noodle sheet by further pressing the noodle dough extruded from the mixer into a dough in-pressing opening of a nozzle connected to a discharge opening of the mixer and extruding the noodle dough from a noodle sheet outlet of the nozzle while extracting gas from the noodle dough using a vacuum pump at a pressure of -0.06 to -0.095 MPa (gauge pressure), and
at a predetermined position between the dough in-pressing opening and the noodle sheet outlet, a cross-sectional shape of a dough passage extending from the dough in-pressing opening to the noodle sheet outlet of the nozzle has a smaller lateral width near a longitudinal central part of the cross-sectional shape than a lateral width at both longitudinal ends.

2. The extrusion noodle-making machine according to claim 1, wherein a cross-sectional area of the dough in-pressing opening is approximately equal to a cross-sectional area of the noodle sheet outlet.

3. The extrusion noodle-making machine according to claim 1 or 2, wherein the predetermined position is near a middle part between the dough in-pressing opening and the noodle sheet outlet.

4. The extrusion noodle-making machine according to claim 1 or 2, wherein the predetermined position is from a position at a predetermined distance from the dough in-pressing opening in a direction toward the noodle sheet outlet to the noodle sheet outlet.

5. The extrusion noodle-making machine according to claim 1 or 2, wherein the predetermined position is near the noodle sheet outlet.

6. The extrusion noodle-making machine according to any one of claims 1 to 5, wherein at least one of four corners of the cross-sectional shape of the dough passage has a curved surface.

7. The extrusion noodle-making machine according to any one of claims 1 to 6, wherein a sliding surface is formed on an inner wall surface of the dough passage.

8. The extrusion noodle-making machine according to any one of claims 1 to 7, wherein the mixer includes two extrusion screws.

9. An extruded noodle sheet produced using the extrusion noodle-making machine according to any one of claims 1 to 8.
